# EUROPEAN PATENT APPLICATION

(11) **EP 4 717 637 A1**
(43) Date of publication of application: **01.04.2026**
(21) Application number: 24913381.0
(22) Date of filing: 24.12.2024
(51) Int. Cl.: B65G 47/91, B25J 15/00, B25J 15/06, B25J 15/08, H01M 10/04

(54) **GRIPPER AND METHOD FOR MANUFACTURING BATTERY PACK BY USING SAME**

(30) Priority: 26.12.2023 KR 20230190943; 30.01.2024 KR 20240014424; 21.05.2024 KR 20240065828
(71) Applicant: LG Energy Solution, Ltd., Seoul 07335 (KR)
(72) Inventor: LEE, Jaechul, Daejeon 34122 (KR); LEE, Jungwoo, Daejeon 34122 (KR); KIM, Heesung, Daejeon 34122 (KR); SEUNG, Kyung Bae, Daejeon 34122 (KR)
(74) Representative: Plasseraud IP
(86) International application number: PCT/KR2024/021076
(87) International publication number: WO 2025/143774

(57) **Abstract**

Provided are a gripper and a method for manufacturing a battery pack by using same. The gripper according to an embodiment, which is for transporting, to a pack housing, a battery cell stack assembly including multiple flat battery cells stacked in a horizontal first direction and side beams coupled to one side and the other side in the horizontal first direction of the multiple flat battery cells, may include: a base disposed above the battery cell stack assembly; a suction part disposed on the lower side of the central area of the base to suck onto the battery cell stack assembly; and lift pins protruding below the base and coupling to grip holes formed in the side beams in the vertical direction.

## Description

### Technical Field

The present disclosure relates to a gripper and a battery pack manufacturing method using the same. Specifically, the present disclosure relates to a gripper for carrying a battery cell stack assembly, in which a module frame applied to a conventional battery module is removed for improving efficiency of a space in a pack housing and improving process efficiency of manufacturing a battery pack, and a battery pack manufacturing method using the same.

### Background Art

The present disclosure relates to a gripper and a battery pack manufacturing method using the same. Specifically, the present disclosure relates to a gripper for carrying a battery cell stack assembly, in which a module frame applied to a conventional battery module is removed for improving efficiency of a space in a pack housing and improving process efficiency of manufacturing a battery pack, and a battery pack manufacturing method using the same.

### Detailed Description of the Invention

### Technical Goals

An object of the present disclosure is to provide a process for mounting a battery cell stack assembly in a pressed state to a pack housing without a module frame applied to a conventional battery module in a method of manufacturing a battery pack, so that efficiency of a space in the pack housing and energy density of the battery pack are improved, and provide a gripper for improving the process efficiency of manufacturing the battery pack and a battery pack manufacturing method using the same.

### Technical solutions

According to an aspect, there is provided a gripper configured to carry, to a pack housing, a battery cell stack assembly including a plurality of planar battery cells stacked in a horizontal first direction and a side beam coupled to one side and another side of the plurality of planar battery cells in the horizontal first direction, the gripper including a base disposed above the battery cell stack assembly, a suction part disposed below the base in a central area of the base and configured to suction the battery cell stack assembly, and lift pins protruding below the base and configured to be coupled to grip holes formed to the side beam in a vertical direction.

Through this, it is possible to improve efficiency of a space in a pack housing, improve energy density of a battery pack, and improve process efficiency of manufacturing a battery pack.

The lift pins may be configured to press, in a state of being inserted into the grip holes, the side beam toward the plurality of planar battery cells.

The base may include a body portion, and an operation part disposed to one side and another side of the body portion in the horizontal first direction, the operation part may be configured to move away from or closer to the body portion, and the lift pins may protrude below the operation part and is configured to move together with the operation part.

The gripper may further include a driving part fixed to the body portion, and a shaft configured to connect the driving part and the operation part, and the operation part may be configured to move by an operation of the driving part.

The grip holes may have a quadrangular shape of which a corner is rounded, and the lift pins may have a quadrangular shape of which a corner is rounded to correspond to the shape of the grip holes.

The lift pins may be arranged in a horizontal second direction crossing the horizontal first direction for each of the side beams coupled to the one side and the other side of the plurality of planar battery cells in the horizontal first direction.

The lift pins which are arranged in the horizontal second direction for a side beam coupled to the one side of the plurality of planar battery cells in the horizontal first direction and the lift pins which are arranged in the horizontal second direction for a side beam coupled to the other side of the plurality of planar battery cells in the horizontal first direction may be provided so that numbers of lift pins correspond to each other.

The lift pins arranged in the horizontal second direction may include a first pin, and a second pin having a length relatively shorter than that of the first pin.

The first pin and the second pin may be disposed alternately in the horizontal second direction.

The lift pins which are arranged in the horizontal second direction for a side beam coupled to the one side of the plurality of planar battery cells in the horizontal first direction and the lift pins which are arranged in the horizontal second direction for a side beam coupled to the other side of the plurality of planar battery cells in the horizontal first direction may be configured so that the lift pins are individually disposed at positions facing each other in the horizontal first direction, one of the lift pins which faces each other in the horizontal first direction may be the first pin, and another one may be the second pin.

The suction part may include a pad having an elastic material.

The suction part may be provided to have a wide-area foam-type material.

Multiple suction holes may be formed to the suction part.

According to another aspect, there is also provided a method of manufacturing a battery pack by joining, to a pack housing through a gripper comprising a base and a lift pin protruding below the base, a battery cell stack assembly comprising a plurality of planar battery cells stacked in a horizontal first direction and a side beam coupled to one side and another side of the plurality of planar battery cells in the horizontal first direction, wherein the side beam includes a planar plate part, and a mounting part protruding opposite to the plurality of planar battery cells from the plate part, and the method of manufacturing the battery pack includes inserting the lift pin into a grip hole formed, in a vertical direction, to the mounting part which is coupled to the one side and the other side of the plurality of planar battery cells in the horizontal first direction, pressing the side beam toward the plurality of planar battery cells with the lift pin by moving the lift pin toward the plurality of planar battery cells and suctioning an upper surface of the battery cell stack assembly with a suction part provided to the gripper, disposing the battery cell stack assembly into the pack housing by moving the battery cell stack assembly which is gripped by the gripper, and separating the gripper from the battery cell stack assembly.

The pack housing may include a floor portion, and a coupling part protruding above the floor portion and disposed below the mounting part when the battery cell stack assembly is disposed to the pack housing, the lift pin may include a first pin provided to have a length at which a lower end protrudes further below the mounting part when the gripper grips the battery cell stack assembly, and a groove for receiving the first pin which protrudes further below the mounting part when the battery cell stack assembly is gripped by the gripper and disposed to the pack housing may be formed to the coupling part.

The coupling part may be disposed between two battery cells stack assemblies arranged to be adjacent in the horizontal first direction in the pack housing, and a groove formed to correspond to each of the two battery cell stack assemblies may be formed at a position not overlapping another in the horizontal first direction.

The pack housing may include a guide pin protruding above from the floor portion of the pack housing, a guide hole into which the guide pin is to be inserted may be formed to a lower portion of the side beam, and when the battery cell stack assembly is moved to be disposed in the pack housing, the battery cell stack assembly may be disposed so that the guide pin is inserted into the guide hole.

The pressing of the side beam toward the plurality of planar battery cells with the lift pin may be performed earlier than the suctioning of the upper surface of the battery cell stack assembly with the suction part provided to the gripper.

The method may further include coupling a coupling member to a coupling part of the pack housing by allowing the coupling member to penetrate a mounting hole vertically formed to the mounting part after the gripper is separated from the battery cell stack assembly.

### Effects of the Invention

According to the example aspects, it is possible to improve efficiency of a space in a pack housing, improve energy density of a battery pack, and improve process efficiency of manufacturing a battery pack.

### Brief Description of Drawings

FIG. 1 is a schematic exploded perspective view illustrating an inside structure of a battery pack according to an example aspect of the present disclosure.
FIG. 2 is a front elevation view of a battery cell stack assembly according to an example aspect of the present disclosure.
FIG. 3 is an enlarged perspective view illustrating a portion of a battery cell stack assembly according to an example aspect of the present disclosure.
FIG. 4 is an enlarged elevation view illustrating a portion of a battery cell stack assembly according to an example aspect of the present disclosure.
FIG. 5 is an enlarged side elevation view illustrating a portion of a battery cell stack assembly according to an example aspect of the present disclosure.
FIG. 6 is an enlarged perspective view illustrating a process in which a side beam is attached to a pressing unit according to an example aspect of the present disclosure.
FIG. 7 is an enlarged elevation view illustrating a state in which a side beam is attached to a battery cell stack assembly according to an example aspect of the present disclosure.
FIG. 8 is an elevation view illustrating a state in which a first gripper grips a side beam of a battery cell stack assembly according to an example aspect of the present disclosure.
FIG. 9 is an enlarged perspective view illustrating a state in which a first gripper grips a side beam of a battery cell stack assembly according to an example aspect of the present disclosure.
FIG. 10 is an elevation view illustrating a state in which a first gripper grips a side beam of a battery cell stack assembly according to an example aspect of the present disclosure.
FIG. 11 is an elevation view illustrating a state in which a battery cell stack assembly according to an example aspect is seated on a pressing unit and illustrating a second gripper approaching the battery cell stack assembly.
FIG. 12 is an elevation view of a front surface of a second gripper according to an example aspect of the present disclosure.
FIG. 13 is an elevation view of a side surface of a second gripper according to an example aspect of the present disclosure.
FIG. 14 is an elevation view of another side surface of a second gripper according to an example aspect of the present disclosure.
FIG. 15 is a plan view of a second gripper according to an example aspect of the present disclosure is viewed from above.
FIG. 16 is a plan view of a portion of a second gripper according to an example aspect of the present disclosure is viewed from below.
FIG. 17 is an elevation view of a state in which a second gripper according to an example aspect of the present disclosure grips a battery cell stack assembly is viewed in front thereof.
FIG. 18 is an elevation view of state in which a second gripper according to an example aspect of the present disclosure grips a battery cell stack assembly is viewed at a side.
FIG. 19 is a plan view of a portion of a battery cell stack assembly gripped by a second gripper according to an example aspect of the present disclosure.
FIG. 20 is a plan view of a pack housing of a battery pack according to an example aspect of the present disclosure is viewed from above.
FIG. 21 is an enlarged perspective view of a portion of a battery pack according to an example aspect of the present disclosure.
FIG. 22 is an enlarged perspective view of a portion of a pack housing of a battery pack according to an example aspect of the present disclosure and a portion of a side beam.
FIG. 23 is a flowchart of a method of manufacturing a battery pack according to various example aspects of the present disclosure.

### Mode for Carrying Out the Invention

Before the present disclosure is described, terms or words used in the present disclosure and the accompanying claims are not to be limited to general definitions or dictionary definitions. The terms and words are to be construed under a principle that an inventor may appropriately define a concept of a term in order to describe their disclosure in the best way. Thus, since example aspects described in the present disclosure and configurations illustrated in the accompanying drawings are merely most desirable example aspects and do not represent all of the technical spirit of the present disclosure, it should be understood that various equivalents and modifications that may replace the example aspects and configurations may be present at the time of filing the application of the present disclosure.

The same reference numerals or symbols illustrated in the accompanying drawings represent components or elements performing substantially identical functions. For convenience for description and understanding, example aspects different from each other may be described with the same reference numerals or symbols. In other words, although a plurality of drawings illustrates elements having the same reference numeral, the plurality of drawings does not mean only one example aspect.

In the following descriptions, terms in a singular form include terms in a plural form unless an apparently and contextually conflicting description is present. Terms such as "including" or "comprising" is to indicate that a feature, a number, an operation, an action, an element, a component, or a combination thereof is present. It should be understood that the terms are not to exclude in advance a possibility that one or more other features, numbers, operations, actions, elements, components, or combinations thereof may be present or added.

In addition, it should be noted in advance that an expression such as an upper side, an upper portion, a lower side, a lower portion, a side surface, a front surface, or a rear surface is based on directions illustrated in the drawings and that the expression may be changed when a direction of a corresponding object is changed.

Terms including an ordinal number such as "first" or "second" used in the present specification and claims may be used to distinguish elements. Such an ordinal number is used to contextually distinguish identical or similar elements from each other. Meanings of the terms may not be limited by use of the ordinal number. For example, a use order, a disposition order, or the like of elements with such an ordinal number may not be limitedly construed by the number. As required, ordinal numbers may be substituted with each other.

Hereinafter, the example aspects of the present disclosure will be described with reference to the accompanying drawings. However, the idea of the present disclosure is not limited to the proposed example aspects. For example, those skilled in the art who understand the idea of the present disclosure may propose another example aspect included in the scope of the idea of the present disclosure through addition, change, removal, or the like of an element. However, the other example aspect is also included in the scope of the idea of the present disclosure. Shapes, sizes, or the like of elements in the drawings may be exaggerated for clearer description.

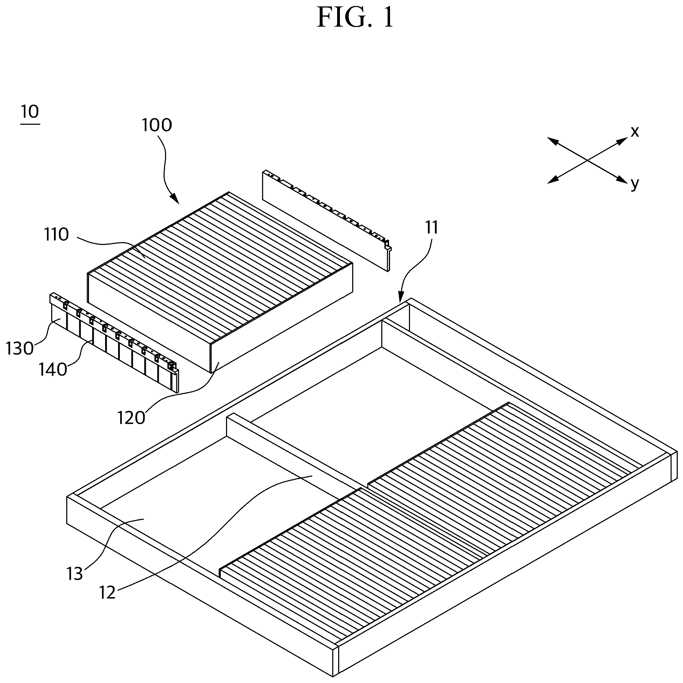

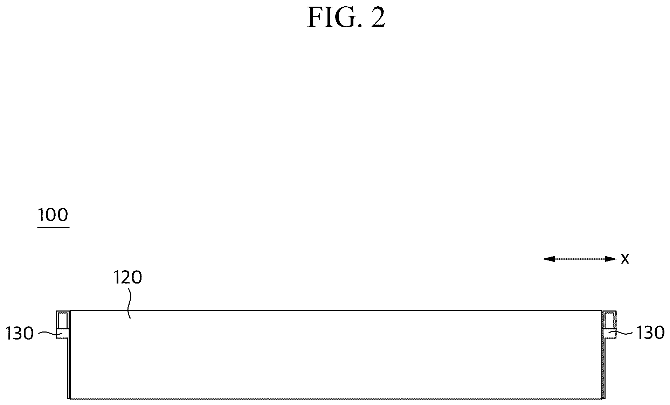

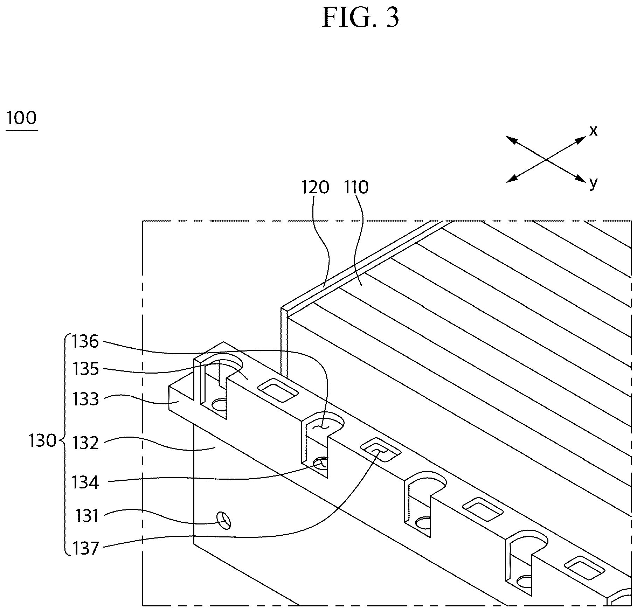

FIG. 1 is a schematic exploded perspective view illustrating an inside structure of a battery pack according to an example aspect of the present disclosure. FIG. 2 is a front elevation view of the battery cell stack assembly according to an example aspect of the present disclosure. FIGS. 3 through 5 are a enlarged perspective view, a elevation view, and a side elevation view illustrating a portion of the battery cell stack assembly according to an example aspect of the present disclosure, respectively.

In the present disclosure, a horizontal second direction y may be defined as a direction crossing a horizontal first direction x. For example, the horizontal second direction y may be a direction perpendicularly crossing the horizontal first direction x.

Hereinafter, in drawings, the horizontal first direction x may be an x-axis direction, and the horizontal second direction y may be a y-axis direction.

A battery pack 10 according to an example aspect of the present disclosure may include a housing 11 and a battery cell stack assembly 100, but may be implemented without a portion thereof, and does not exclude an additional element.

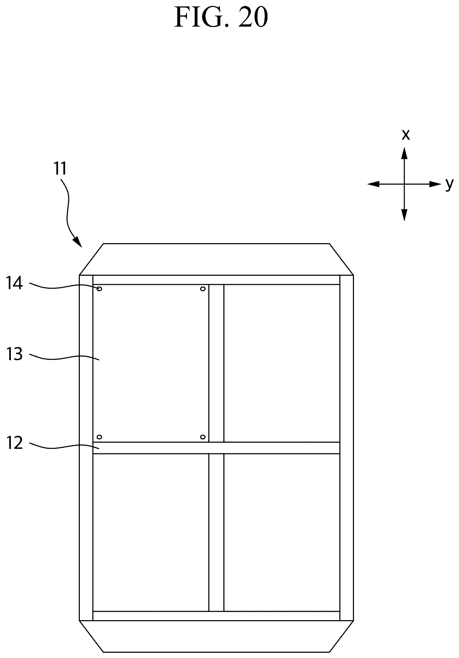

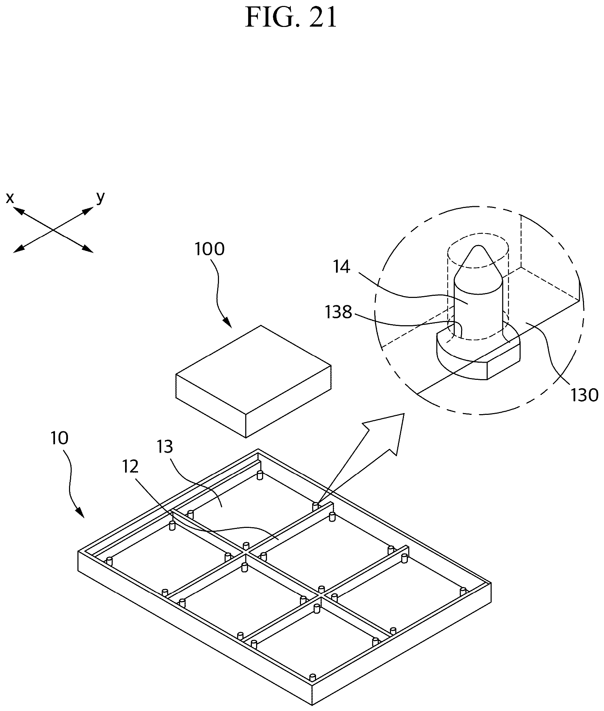

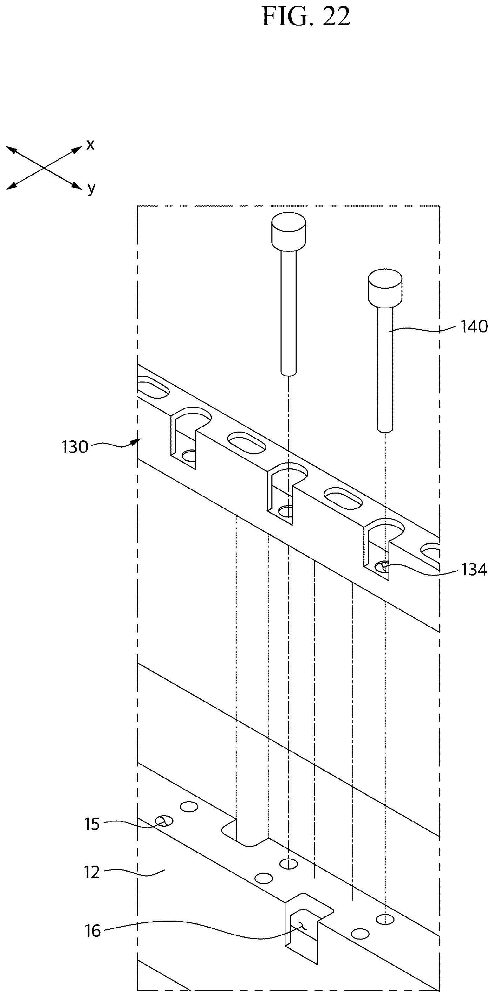

Referring to FIG. 1, the battery pack 10 may include the housing 11. The battery cell stack assembly 100 may be mounted to the pack housing 11. The pack housing 11 may include at least one of a coupling part 12, a floor portion 13, a guide pin (e.g., a guide pin 14 of FIGS. 20 and 21), a coupling hole (e.g., a coupling hole 15 of FIG. 22), and a groove (e.g., a groove 16 of FIG. 22).

The coupling part 12 may protrude above the floor portion 13. The coupling part 12 may be extended in the horizontal second direction y. For example, the coupling part 12 may be disposed below a mounting part (e.g., a mounting part 133 of FIG. 3) of a side beam 130 when the battery cell stack assembly 100 is disposed to the pack housing 11. The coupling part 12 may be at least disposed between two battery cell stack assemblies arranged to be adjacent to each other in the horizontal first direction x in the pack housing 11.

A detailed structure of the pack housing 11 will be additionally described below with reference to FIGS. 20 and 21.

The battery pack 10 may include the battery cell stack assembly 100. The battery cell stack assembly 100 may include a plurality of planar battery cells 110, a busbar frame assembly 120, and the side beam 130, but may be implemented without a portion thereof, and does not exclude an additional element.

Referring to FIGS. 1 through 5, the battery cell stack assembly 100 may include the plurality of planar battery cells 110. The plurality of planar battery cells 110 may be stacked in the horizontal first direction x.

The battery cell stack assembly 100 may include the busbar frame assembly 120. The busbar frame assembly 120 may be coupled to one side and another side of the plurality of planar battery cells 110 in the horizontal second direction y. A lead (not illustrated) extended from a battery cell 110 in the horizontal second direction y, for example, may be bent after penetrating the busbar frame assembly 120 and connected to the busbar frame assembly 120.

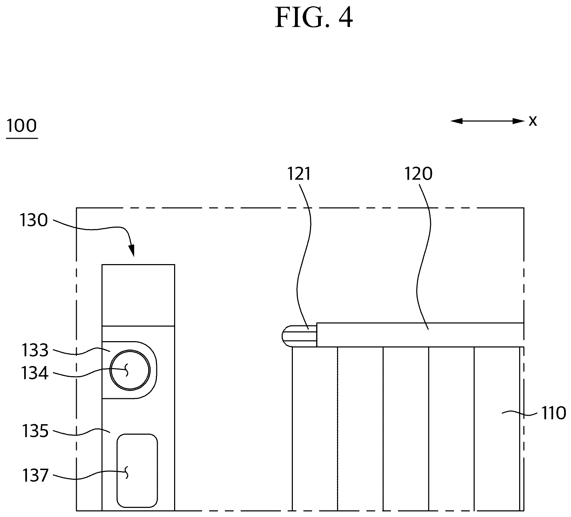

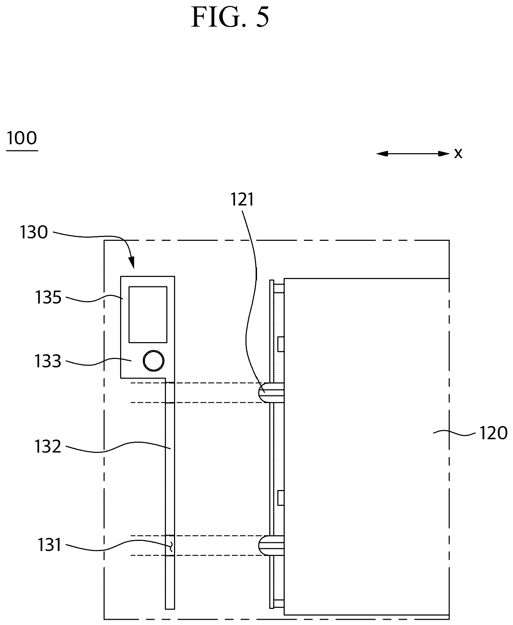

Referring to FIGS. 4 and 5, the busbar frame assembly 120 may include a pin 121. The pin 121 may protrude from each of one side and another side of the busbar frame assembly 120 in the horizontal first direction x. The pin 121 may be understood as protruding in a direction toward the side beam 130. The pin 121 may be inserted into a hole 131 of FIG. 5 formed to the side beam 130. The pin 121 may guide an accurate coupling position of the side beam 130.

The pin 121 may include a shape of which a corner of an end portion is chamfered. Alternatively, the pin 121 may include a portion of which a cross section becomes smaller in a direction away from the busbar frame assembly 120. For example, the end portion of the pin 121 may be formed in a tapered shape or hemispherical shape. Through this, in a process of attaching the side beam 130 to the plurality of planar battery cells 110, although a position of the side beam 130 is not precisely adjusted, the pin 121 of the busbar frame assembly 120 may be easily inserted into the hole 131 of the side beam 130.

The battery cell stack assembly 100 may include the side beam 130. The side beam 130 may be coupled to one side and another side of the plurality of planar battery cells 110 in the horizontal first direction x. The side beam 130 may substitute for at least a portion of a function of an existing module frame (e.g., a metal frame) for surrounding a battery cell and a function of a beam structure of a existing pack housing.

Specifically, referring to FIGS. 1 and 3 and FIG. 22 that will be described below, the battery cell stack assembly 100 (e.g., the side beam 130 of the battery cell stack assembly 100) may be fixed and coupled to the pack housing 11 by a coupling member 140 in a state of being disposed in the pack housing 11. For example, the coupling member 140 may be fixed to the coupling part 12 (e.g., the coupling hole 15 which is formed to the coupling part 12) which is formed to the floor portion 13 of the pack housing 11 by penetrating a mounting hole 134 of the side beam 130. Through this structure, a plurality of battery cell stack assemblies 100 may be prevented from being spaced apart in the horizontal first direction x. At this point, the side beam 130 may be fixed to the coupling part 12 in a state of partially overlapping the coupling part 12 of the pack housing 11 in a vertical direction (e.g., a direction perpendicular to both of an x-axis and a y-axis in FIG. 1). According to such a coupling structure, a space used for coupling of the side beam 130 and the coupling part 120 may be minimized. In addition, as long as a space in which the side beam 130 is disposed between two battery cell stack assemblies 100 arranged to neighbor to each other in the horizontal first direction x without wasting a space in the x-axis direction is secured, space efficiency in the pack housing 11 may be improved. Through this, a benefit in terms of energy density in a battery pack may be obtained.

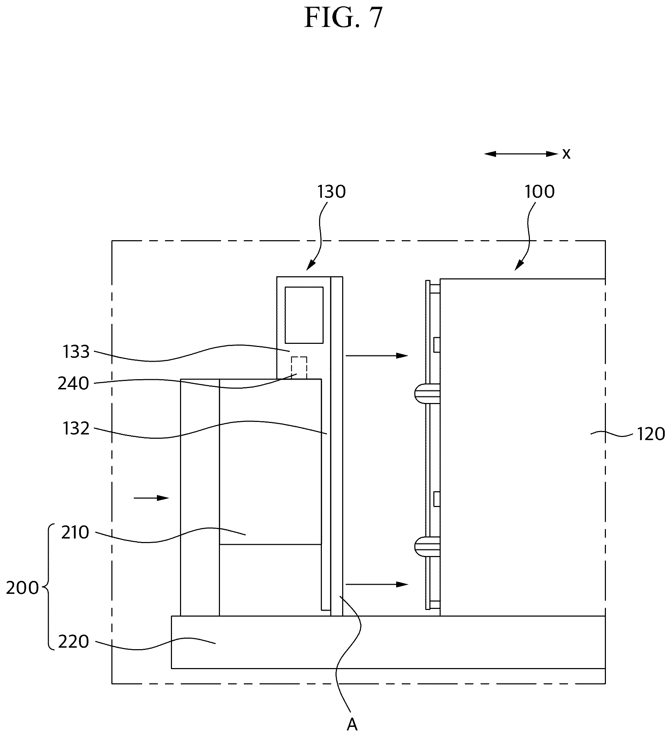

Meanwhile, referring to FIG. 7 together that will be described below, the side beam 130 may be fixed to the plurality of planar battery cells 110 by an adhesive A. For example, before the side beam 130 is coupled to the plurality of planar battery cells 110, the adhesive A may be applied to a surface of the side beam 130, which faces the plurality of planar battery cells 110. However, the adhesive A is not limited to such an example aspect and may be applied to a surface of the plurality of planar battery cells 110, which faces the side beam 130, before the side beam 130 is coupled to the plurality of planar battery cells 110.

In contrast, the side beam 130 may be coupled to the plurality of planar battery cells 110 by an additional mechanical mechanism. For example, an additional coupling member (e.g., a bolt) may be fixed and coupled to the busbar frame assembly 120 by penetrating the side beam 130, and through this, the side beam 130 may be attached to the plurality of planar battery cells 110.

Referring to FIGS. 3 through 5, the hole 131 into which the pin 121 of the busbar frame assembly 120 may be inserted may be formed to the side beam 130. The hole 131 may be formed to a plate part 132 of the side beam 130. For example, when the side beam 130 is attached to the plurality of planar battery cells 110, the pin 121 of the busbar frame assembly 120 may be inserted into the hole 131 of the side beam 130 to guide the accurate coupling position of the side beam 130. FIG. 5 illustrates a structure in which two holes 131 into which the pin 121 of the busbar frame assembly 120 may be inserted are formed to be spaced apart from each other in the vertical direction on a side of the side beam 130, but various example aspects of the present disclosure are not limited to the number and such a structure of holes, and only one hole 131 may be formed on the side of the side beam 130, or three or more holes 131 may be formed thereon.

Meanwhile, the side beam 130 may include the plate part 132. The plate part 132 may be provided in a planar shape. The plate part 132 may have an area for sufficiently covering an electrode receiving part (that is a portion to which an electrode assembly is received) of each planar battery cell 110. The plate part 132 may be provided in a size and shape for covering both of the planar battery cell 110 and the busbar frame assembly 120 in the x-axis direction. The plate part 132 may be a portion that directly presses inward the plurality of planar battery cells 110. Also, the plate part 132 may be a portion suctioned by an air suction part 230 formed to a pressing unit 200 that will be described below.

The side beam 130 may include the mounting part 133. The mounting part 133 may protrude toward a side of the plate part 132, which is opposite to the plurality of planar battery cells 110 (that is, in an outward direction).

Referring to FIG. 3 the mounting part 133 may be horizontally extended. Specifically, the mounting part 133 may be extended in the horizontal second direction y. Through this, since the mounting part 133 may serve as a girder for the plate part 132, structural rigidity of the side beam 130 may be improved.

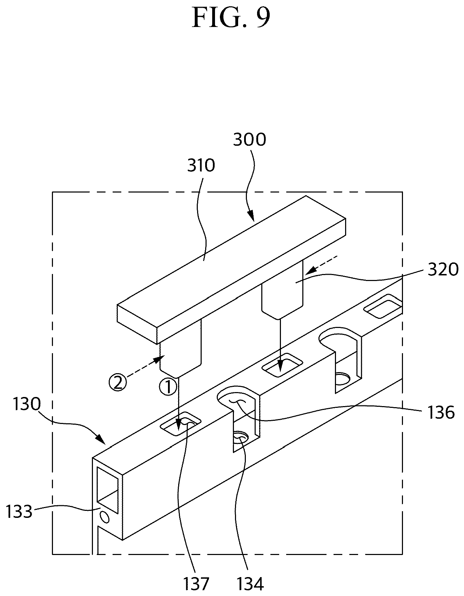

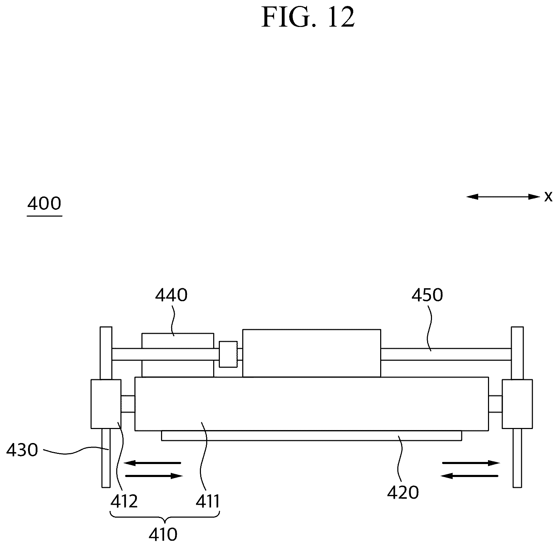

In addition, even when the mounting hole 134 and/or a grip hole 137 is formed to the mounting part 133 as described below, since a stress due to each member (e.g., the coupling member 140, a gripper pin 320 (see FIG. 9), a lift pin 430 (see FIG. 12), or the like) that may be inserted into the above-described holes 134 and 137 may be dispersed, damage to or deformation of the side beam 130 due to concentration of the stress may be prevented.

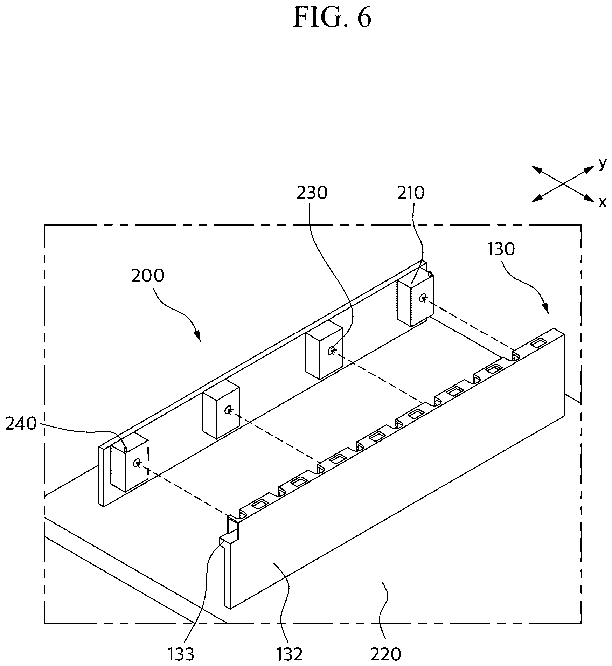

The mounting part 133 may be formed to an upper portion of the plate part 132. For example, the mounting part 133 may be formed at a position in the plate part 132, which is above a half of a height of the plate part 132. Specifically, when described with reference to FIGS. 6 and 7 together, in order that a pressing part 210 (see FIGS. 6 and 7) of the pressing unit 200 (see FIGS. 6 and 7) which will be described below effectively presses the side beam 130, it may be desired that a vertically central portion of the plate part 132 is pressed. Accordingly, an upper boundary of the pressing part 210 may be positioned above the vertically central portion of the plate part 132. Thus, in order that the pressing part 210 effectively presses the plate part 132 without interference with the mounting part 133, it may be desired that a lower boundary of the mounting part 133 is positioned above the upper boundary of the pressing part 210.

The mounting hole 134 may be formed to the mounting part 133. The mounting hole 134 may be formed by penetration in a direction perpendicular to a direction in which the mounting part 133 protrudes from the plate part 132 (that is, in the vertical direction). A plurality of mounting holes 134 may be formed. The plurality of mounting holes 134 may be spaced apart from each other and arranged in the horizontal second direction y. When the battery cell stack assembly 100 is coupled to the pack housing 11, the coupling member 140 may penetrate the mounting hole 134 to be coupled to the coupling hole 15 (illustrated in FIG. 22) formed to the coupling part 12 of the pack housing 11.

Meanwhile, the side beam 130 may include a cover part 135. The cover part 135 may be formed above the mounting part 133. Specifically, the cover part 135 may have a structure at least including an upper surface extended opposite to the plurality of planar battery cells 110 (that is, toward an outside) from the plate part 132 and a side surface extended from an edge of the upper surface and connected to an upper surface of the mounting part 133. The cover part 135 may improve the structural rigidity of the side beam 130 including the mounting part 133 and the plate part 132 by forming a bent planar structure for reinforcing the upper surface of the mounting part 133.

An opening portion 136 may be formed to the cover part 135 at a position corresponding to the mounting hole 134. For example, the opening portion 136 may be formed at a position overlapping the mounting hole 134 in the vertical direction. Through the opening portion 136, the coupling member 140 which fixes the side beam 130 to a coupling part of the pack housing 11 may be inserted into the mounting part 133 without interference with the cover part 135.

The opening portion 136 may have a structure in which the upper surface and the side surface of the cover part 135 are opened together. Through such a structure, in a process of coupling the coupling member 140 to the mounting hole 134 and the coupling part 12 after the battery cell stack assembly 100 is seated in the pack housing 11, a coupling tool (not illustrated) for coupling the coupling member 140 may easily approach the coupling member 140.

Referring back to FIGS. 3 and 4, the side beam 130 may include the grip hole 137. The grip hole 137 may be formed to the side beam 130 in the vertical direction. Specifically, the grip hole 137 may be formed by penetrating the upper surface of the cover part 135. In addition, the grip hole 137 may be formed by vertically penetrating the mounting part 133. The grip hole 137 which is formed by penetrating the upper surface of the cover part 135 and the grip hole 137 which is formed by penetrating the mounting part 133 may be formed at positions overlapping each other in the vertical direction. Hereinafter, the grip hole 137 of the cover part 135 and the grip hole 137 of the mounting part 133 which overlap each other in the vertical direction to be formed may be understood as one grip hole 137. However, the grip hole 137 is not limited to such an example aspect and may be formed by penetrating only the upper surface of the cover part 135 and may not be formed to the mounting part 133 by penetration in another example aspect.

Meanwhile, a plurality of grip holes 137 may be formed. The plurality of grip holes 137 may be spaced apart from each other and arranged in the horizontal second direction y at a predetermined interval. In example aspects, the gripper pin 320 (illustrated in FIG. 9) of a first gripper 300 (illustrated in FIG. 9) may be inserted into the grip hole 137. Also, the lift pin 430 (illustrated in FIG. 12) of a second gripper 400 (illustrated in FIG. 12) may be inserted into the grip hole 137.

The grip hole 137 may have a quadrangular shape of which a vertex (or corner) portion is formed to be rounded. For example, the grip hole 137 may have a shape of which a corner portion is filleted. The grip hole 137 may correspond to a shape of the gripper pin 320 (illustrated in FIG. 9), of which a cross section is rounded, of the first gripper 300 (illustrated in FIG. 9) and/or the lift pin 430 (illustrated in FIG. 12), of which a cross section is rounded, of the second gripper 400 (illustrated in FIG. 12), but may be formed in a size larger than a size of a cross section of each of the gripper pin 320 (illustrated in FIG. 9) and the lift pin 430 (illustrated in FIG. 12) by a predetermined ratio.

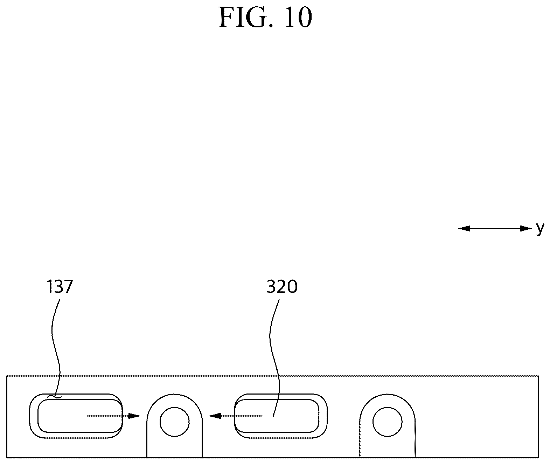

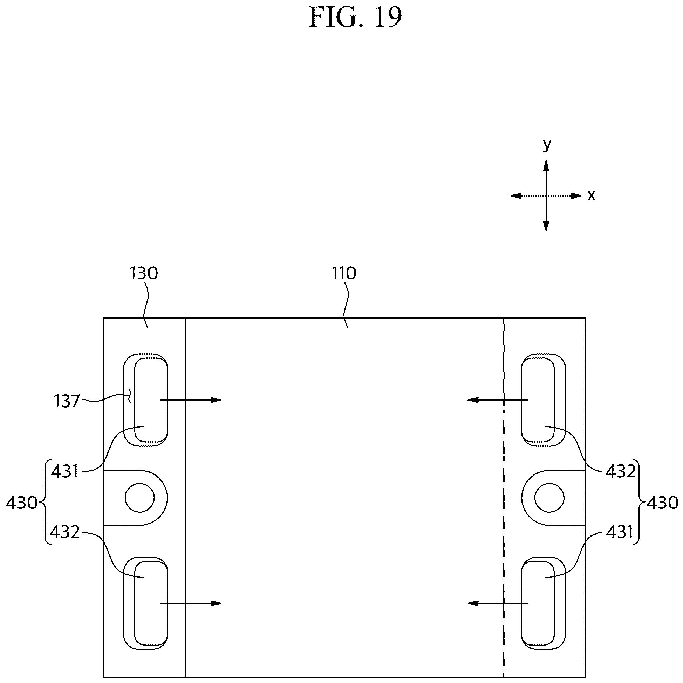

As the grip hole 137 is formed in the quadrangular shape of which the vertex (or corner) portion is rounded, the side beam 130 may be stably pressed in area by the gripper pin 320 (illustrated in FIG. 9) and/or the lift pin 430 (illustrated in FIG. 12). This will be described below in detail with reference to FIGS. 10 and 19.

Meanwhile, a side of the grip hole 137 toward the plurality of planar battery cells 110 may be conformed, in the vertical direction, to a surface of the plate part 132 opposite to the plurality of battery cells 110. In other words, at least a portion of a inner side surface forming the grip hole 137 may be positioned together with a surface of the plate part 132 on an identical plane. Through this, in a process in which a predetermined component inserted into the grip hole 137, for example, the lift pin 430 (illustrated in FIG. 12) of the second gripper 400 (illustrated in FIG. 12) presses the side beam 130 toward the plurality of planar battery cells 110, the pressing component (e.g., the lift pin 430 illustrated in FIG. 12) and the side beam 130 may be in areal contact with each other, so that pressing may be efficiently performed.

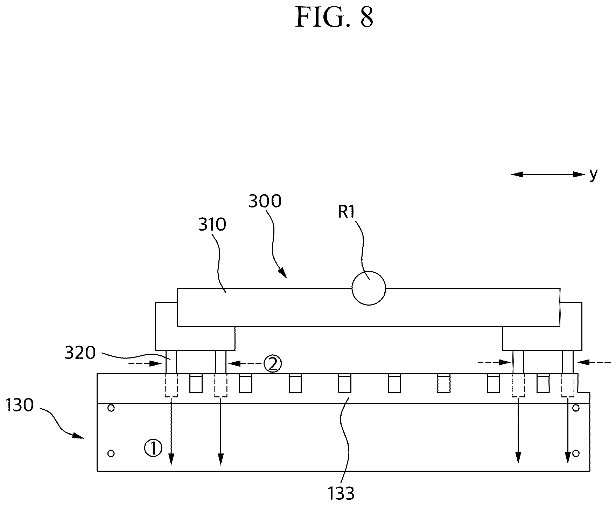

FIG. 6 is an enlarged perspective view illustrating a process in which a side beam is attached to a pressing unit according to an example aspect of the present disclosure. FIG. 7 is a side elevation view illustrating a state in which a side beam is attached to a battery cell stack assembly according to an example aspect of the present disclosure. FIGS. 8 through 10 illustrate a state in which a first gripper grips a side beam of a battery cell stack assembly according to an example aspect of the present disclosure.

Referring to FIG. 6 and 7, the side beam 130 of the battery cell stack assembly 100 according to an example aspect of the present disclosure may be coupled to the plurality of planar battery cell stack assembly 110 by the pressing unit 200. In addition, the pressing unit 200 may press the battery cell stack assembly 100 until a length of the battery cell stack assembly 100 in the horizontal first direction x reaches a required value and may maintain a pressed state.

The pressing unit 200 may include a palette 220. The plurality of planar battery cells 110 may be seated on the palette 220.

The pressing unit 200 may include the pressing part 210. Referring to FIG. 6, the pressing part 210 may have a structure in which a plurality of block-shaped units are arranged in the horizontal second direction y. The pressing part 210 may be attached to a planar structure extended in a vertical direction and may be formed to protrude toward the plurality of planar battery cells 110. However, the pressing part 210 is not limited thereto and may be provided as a single structure in which one block-shaped unit is elongated in the horizontal second direction y.

Meanwhile, two pressing parts 210 (e.g., the planar structure and the block-shaped unit(s) formed to protrude therefrom) may be provided. The two pressing parts 210 may be individually disposed to one side and another side in the horizontal first direction x of the plurality of planar battery cells 110 disposed on the palette 220. The two pressing parts 210 may be disposed to face each other and move in a direction in which each faces another. For example, the two pressing part 210 may be disposed to face each other in the horizontal first direction x and move in a direction to or away from each other.

In a process of manufacturing the battery cell stack assembly 100, when the side beam 130 is supplied to the pressing unit 200, the side beam 130 may be disposed so that a lower area of the mounting part 133 of the plate part 132 is attached to a surface of the pressing part 210, which faces the plurality of planar battery cells 110, and so that a lower surface of the mounting part 133 is seated on an upper surface of the pressing part 210.

The side beam 130 may be attached to the plurality of planar battery cells 110 by an operation of the two pressing parts 210. Specifically, in a state in which the two pressing parts 210 are far from each other, after the side beam 130 is disposed to respective surfaces facing each other of the two pressing parts 210, the two pressing parts 210 may be moved in the direction to each other, that is, toward the plurality of planar battery cells 110. Through this, the side beam 130 may be attached to the one side and the other side of the plurality of planar battery cells 110 in the horizontal first direction x. Attaching the side beam 130 to the plurality of planar battery cells 110 may be performed by the adhesive A.

The two pressing parts 210 may press the side beam 130 toward the plurality of planar battery cells 110. Specifically, the battery cell stack assembly 100 may be pressed by an operation of the two pressing parts 210 until the length of the battery cell stack assembly 100 in the horizontal first direction x reaches a required level. At this point, the required level for the length of the battery cell stack assembly 100 in the horizontal first direction x may be a length for allowing the battery cell stack assembly 100 to be disposed in the pack housing 11 (illustrated in FIG. 1) and the side beam 130 to be coupled to the coupling part 12 (illustrated in FIG. 1) of the pack housing 11 (illustrated in FIG. 1). For example, referring to FIG. 4, a length of the planar battery cells 110 in the horizontal first direction x before pressing may be larger than a length of the busbar frame assembly 120 in the horizontal first direction x excluding the pin 121, and the plurality of planar battery cells 110 may be pressed by pressing by the pressing part 210 until the length of the planar battery cells 110 in the horizontal first direction x corresponds to the length of the busbar frame assembly 120 in the horizontal first direction x excluding the pin 121.

Referring to FIG. 7, the pressing part 210 may be provided to overlap a vertically middle area of the side beam 130 in a horizontal direction. Through such a structure, since the pressing part 210 may press the vertically middle area of the side beam 130, pressing of the side beam 130 by the pressing part 210 may be effectively performed.

An upper boundary of the pressing part 210 may be provided below a lower boundary of the mounting part 133 of the side beam 130. Through this, the pressing part 210 may press the side beam 130 toward the plurality of planar battery cells 110 at a portion lower than the mounting part 133 in a state of being in areal contact with the plate part 132 formed below the mounting part 133 of the side beam 130 without interfering with the mounting part 133.

Referring to FIG. 6, the pressing unit 200 may include the air suction part 230. The air suction part 230 may be provided to the pressing part 210. The air suction part 230 may be provided to a surface of the pressing part 210, which faces the side beam 130. When the side beam 130 is supplied to the pressing unit 200, the side beam 130 may maintain a state of being attached to the pressing part 210 by an operation of the air suction part 230.

Referring to FIGS. 6 and 7, the pressing unit 200 may include a protrusion pin 240. The protrusion pin 240 may protrude above from the upper surface of the pressing part 210. When the side beam 130 is supplied to the pressing unit 200, the protrusion pin 240 may be disposed at a position overlapping the mounting part 133 of the side beam 130 in the vertical direction. The protrusion pin 240 may be inserted into a temporary fixation hole (not illustrated) formed on the lower surface of the mounting part 133 of the side beam 130, the mounting hole 134, or the grip hole 137. The protrusion pin 240 may guide a position for supplying the side beam 130.

The protrusion pin 240 may vertically operate. Specifically, the protrusion pin 240 may operate to descend in order to enter into the pressing part 210. The protrusion pin 240 may protrude above the pressing part 210 until the second gripper 400 (illustrated in FIG. 12) grips the battery cell stack assembly 100 after the side beam 130 is supplied to the pressing unit 200 and the pressing part 210 presses the battery cell stack assembly 100, and then, the protrusion pin 240 may descend not to protrude from the pressing part 210 before pressing by the pressing part 210 is ended. With respect to such an operation of the protrusion pin 240, the pressing part 210 may move away from the battery cell stack assembly 100 when the pressing is ended. At this point, the protrusion pin 240 may descend and enter into the pressing part 210, so that an operation of the pressing part 210 may not interfere with the side beam 130.

Referring to FIGS. 8 and 9, the side beam 130 may be gripped by an articulated robot R1 and supplied to the pressing part 200. The side beam 130 may be rotated through various angles by the articulated robot R1.

The articulated robot R1 may include the first gripper 300. The first gripper 300 may be provided at an end of the articulated robot R1. The side beam 130 may be gripped by the first gripper 300 and provided to the pressing unit 200.

The first gripper 300 may include a base 310. The base 310 may be a portion connected to an arm of the articulated robot R1. In an example aspect, a driving part (not illustrated) for driving the gripper pin 320 may be received in the base 310. In contrast, the gripper pin 320 may be disposed at another position such as the arm of the articulated robot R1. Also, a position thereof may be manually adjusted by a worker without control by an additional driving part.

The first gripper 300 may include the gripper pin 320. The gripper pin 320 may protrude below from the base 310. The side beam 130 may be gripped by the first gripper 300 as the gripper pin 320 is inserted into the mounting hole 134 formed to the side beam 130.

A plurality of gripper pins 320 may be provided. The plurality of gripper pins 320 may be spaced apart from each other and arranged in the horizontal second direction y at a predetermined interval. A position of each gripper pin 320 may be adjusted while each gripper pin 320 moves in the horizontal second direction y, so that each gripper pin 320 may be fixed to the first gripper 300.

For example, referring to FIG. 8 and 9, at least two gripper pins 320 among the plurality of gripper pins 320 may move in a direction to or away from each other. The two gripper pins 320 may move closer to or away from each other after inserted into the mounting holes 134, and through this, the side beam 130 may be gripped by the first gripper 300. For example, when the two gripper pins 320 among the plurality of gripper pins 320 become closer to each other after inserted into the mounting holes 134, it may be understood that the side beam 130 is gripped by the gripper 300 as being tightened by the two gripper pins 320. In order to effectively implement such a gripping scheme, an even number of gripper pins 320 may be provided, so that two adjacent gripper pins 320 forms a pair, and the pair of the gripper pins 320 may move closer to or away from each other.

Referring to FIG. 9, the gripper pin 320 may have a cylindrical shape extended in the vertical direction. A horizontal cross section of the gripper pin 320 may have a quadrangular shape of which a vertex (or corner) portion is rounded. That is, the horizontal cross section of the gripper pin 320 may have a shape of which a vertex (or corner) portion is filleted. A shape of the horizontal cross section of the gripper pin 320 may correspond to a shape of the grip hole 137 of the side beam 130. The horizontal cross section of the gripper pin 320 may be provided in a size smaller than that of the grip hole 137 of the side beam 130. As the horizontal cross section of the gripper pin 320 and the grip hole 137 are provided in quadrangular shapes, when the gripper pin 320 is inserted into the grip hole 137 to move in the horizontal second direction y, since the gripper pin 320 and the grip hole 137 may be in linear contact with each other, the first gripper 300 may stably grip the side beam 130. In addition, as vertex (or corner) portions of the horizontal cross section of the gripper pin 320 and the shape of the grip hole 137 are formed to be rounded, although the gripper pin 320 is not perfectly inserted into a center of the grip hole 137, since the gripper pin 320 may be slid along the rounded portion of the grip hole 137 to be aligned to a central area of the grip hole 137 in the horizontal first direction x when the gripper pin 320 moves in the horizontal second direction y, a stable grip by the gripper pin 320 may be implemented. Also, as the vertex (or corner) portions of the horizontal cross section of the gripper pin 320 and the shape of the grip hole 137 are formed to be rounded, although the gripper pin 320 is slightly obliquely inserted into the grip hole 137, deformation of or damage to the side beam 130 due to concentration of stress by a corner portion of the gripper pin 320 may be prevented. However, a shape of the cross section of the gripper pin 320 is not limited thereto and may be circular or oval or may be provided in a rectangular shape of which a vertex (or corner) portion is not rounded.

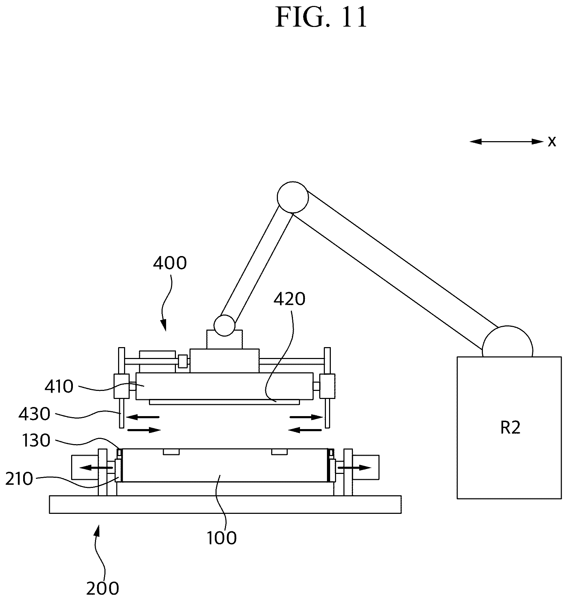

FIG. 11 is an elevation view illustrating a state in which a battery cell stack assembly according to an example aspect is pressed by the pressing unit 200 and illustrating a second gripper approaching the battery cell stack assembly.

A process in which the second gripper 400 approaches the battery cell stack assembly 100 which is pressed by the pressing unit 200 and grips the battery cell stack assembly 100 will be schematically described with reference to FIG. 11.

The second gripper 400 may be provided at an end of an articulated robot R2. The battery cell stack assembly 100 which is gripped by the second gripper 400 may be carried through various paths and angles by the articulated robot R2. Here, the articulated robot R2 may be identical to the articulated robot R1 to which the first gripper 300 (illustrated in FIG. 9) is connected or may be separately provided.

The battery cell stack assembly 100 may be carried to the pack housing 11 (illustrated in FIG. 1) after gripped by the second gripper 400 in a state of being pressed by the pressing unit 200. Hereinafter, the second gripper 400 may be a gripper for carrying a battery cell stack assembly, which grips and carrying the battery cell stack assembly 100 to the pack housing 11.

Specifically, in a state in which the battery cell stack assembly 100 is pressed by the pressing unit 200, the lift pin 430 protruding below from a base 410 of the second gripper 400 may be inserted into the grip hole 137 of the side beam 130 provided to each of one side and another side of the battery cell stack assembly 100 in the horizontal first direction x. The lift pin 430 may press the side beam 130 inward by moving in a direction from the side beam 130 toward the plurality of planar battery cells 110 in a state of being inserted into the grip hole 137.

In a state in which the lift pin 430 is inserted into the grip hole 137 of the side beam 130, an upper surface of the battery cell stack assembly 100 may be suctioned by a suction part 420 provided to the second gripper 400. Through this, the battery cell stack assembly 100 may be lifted. When the battery cell stack assembly 100 is lifted, pressing is ended as the two pressing parts 210 become far from each other. At this point, since the lift pin 430 presses the side beam 130 inward, a state in which the battery cell stack assembly 100 is pressed may be continuously maintained.

The battery cell stack assembly 100 lifted by the second gripper 400 may be carried to the pack housing 11 (illustrated in FIG. 1) and mounted to the pack housing 11 (illustrated in FIG. 1) in a state of being pressed.

Hereinafter, a detailed structure of the second gripper 400 will be described with reference to FIGS. 12 through 19.

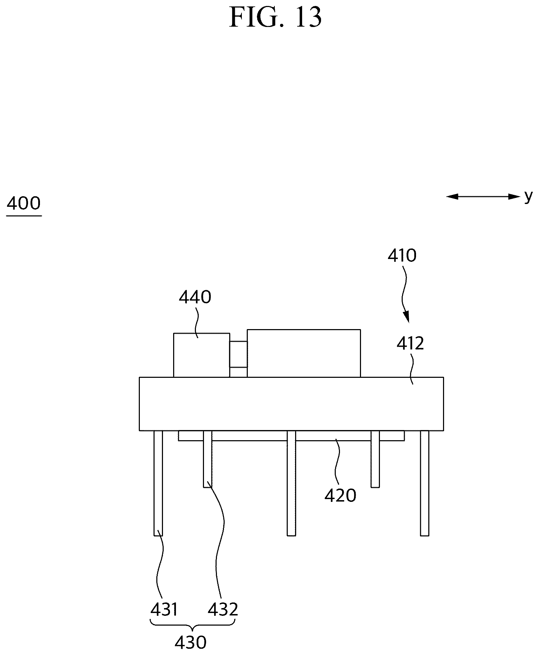

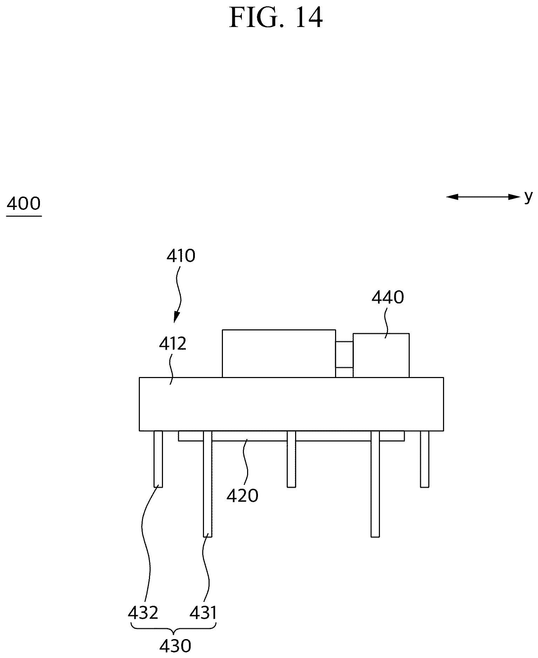

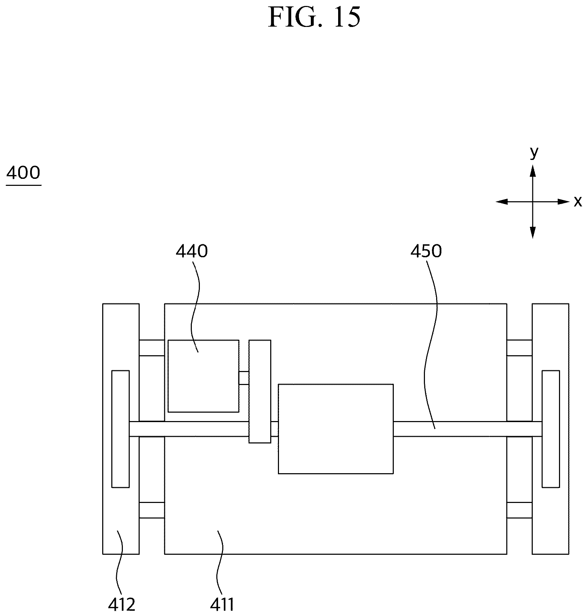

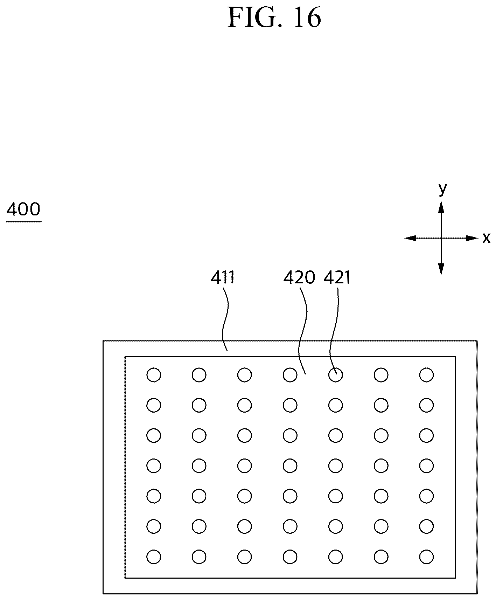

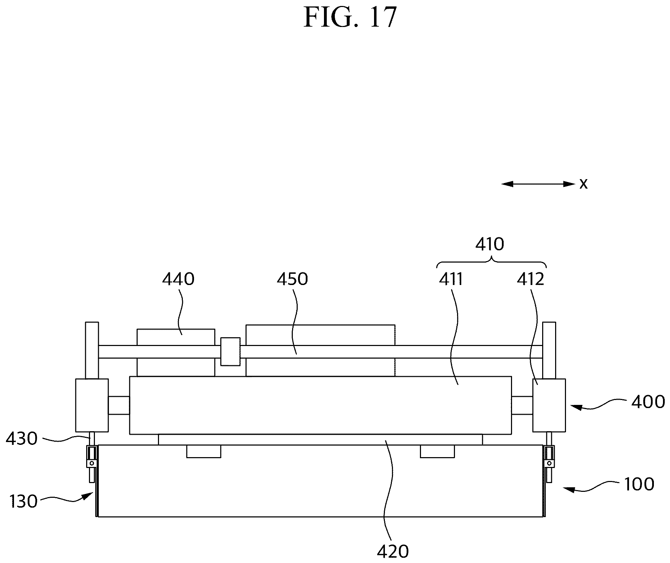

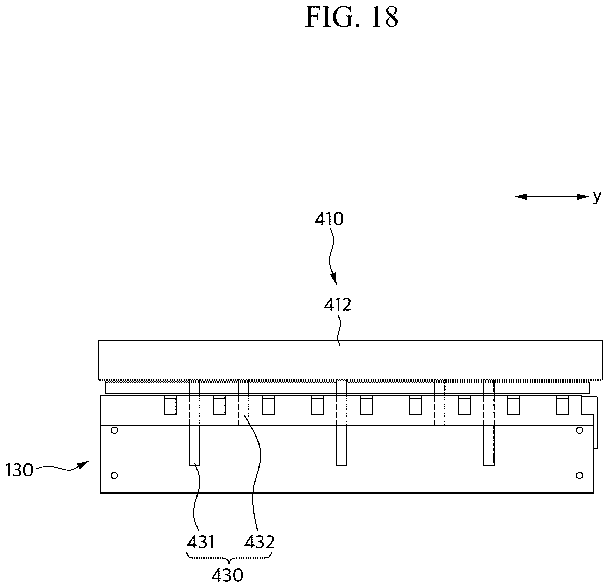

FIG. 12 is an elevation view of a front surface of a second gripper according to an example aspect of the present disclosure. FIG. 13 is an elevation view of one side surface of the second gripper according to an example aspect of the present disclosure. FIG. 14 is and elevation view of another side surface of the second gripper according to an example aspect of the present disclosure. FIG. 15 is a plan view of that the second gripper according to an example aspect of the present disclosure is viewed from above. FIG. 16 is a plan view of that a portion of the second gripper according to an example aspect of the present disclosure is viewed from below. FIG. 17 is a elevation view of that a state in which the second gripper according to an example aspect of the present disclosure grips a battery cell stack assembly is viewed in front thereof. FIG. 18 is an elevation view of that a state in which the second gripper according to an example aspect of the present disclosure grips the battery cell stack assembly is viewed at a side. FIG. 19 is a plan view of a portion of the battery cell stack assembly gripped by the second gripper according to an example aspect of the present disclosure.

Referring to FIGS. 12 through 19, the second gripper 400 may include the base 410. In a state in which the second gripper 400 grips the battery cell stack assembly 100, the base 410 may be disposed above the battery cell stack assembly 100.

The base 410 may include a body portion 411. The body portion 411 may be formed in a central area of the base 410. The body portion 411 may be a portion connected to an arm of an articulated robot R. The body portion 411 may be a portion of which a position relative to the battery cell stack assembly 100 is fixed in a process of coupling the second gripper 400 to the battery cell stack assembly 100.

The base 410 may include an operation part 412. The operation part 412 may be provided to one side and another side of the body portion 411 in the horizontal first direction x. Referring to FIG. 12, the operation part 412 may be provided to left and right of the body portion 411. The operation part 412 may move away from or closer to the body portion 411.

The second gripper 400 may include the suction part 420. The suction part 420 may be disposed below the base 410 in the central area of the base 410. For example, the suction part 420 may be disposed below the body portion 411. The suction part 420 may be tightly attached to an upper surface of the battery cell stack assembly 100.

The suction part 420 may suction the battery cell stack assembly 100. The suction part 420 may suction the upper surface of the battery cell stack assembly 100 by air suction to prevent the battery cells 110 from falling below in a gravitational direction while the battery cell stack assembly 100 is transferred. Accordingly, the battery cell stack assembly 100 may be stably carried while having a structure in which a conventional module frame that covers upper surfaces and lower surfaces of the battery cells 110 is omitted.

Referring to FIG. 16 the suction part 420 may be provided in a form of a pad. The upper surface of the battery cell stack assembly 100 to which the suction part 420 is tightly attached may be provided in an approximately plane-like shape. In order to provide a suction force for the battery cell stack assembly 100, it may be desired that the suction part 420 is provided in a type of a pad to correspond to the upper surface of the battery cell stack assembly 100. However, the suction part 420 is not limited thereto and may be provided in various forms as long as the suction part 420 may provide a sufficient suction force for the battery cell stack assembly 100.

The suction part 320 may be provided as a pad having an elastic material. For example, the suction part 420 may have a sponge material and may be provided to have a wide-area foam-type material for implementing sealing as a shape thereof is changed according to a shape of a surface to be suctioned of a suction object. Specifically, the upper surface of the battery cell stack assembly 100 may be provided as an approximately irregularly uneven surface. Thus, in order that the suction part 420 is effectively attached to the irregular upper surface of the battery cell stack assembly 100, it may be desired that the suction part 420 is provided in a type of a deformable pad.

Multiple suction holes 421 may be formed to the suction part 420. For example, as illustrated in FIG. 16, the multiple suction holes 421 may be formed in a latticed array in the suction part 420. However, the multiple suction holes 421 are not limited thereto and may be in various arrays. As the multiple suction holes 421 are provided, the suction part 420 may further effectively suction the irregular upper surface of the battery cell stack assembly 100.

Referring to FIGS. 12 through 14, the second gripper 400 may include the lift pin 430. The lift pin 430 may protrude below the base 410. Specifically, the lift pin 430 may protrude below the operation part 412.

Referring to FIGS. 17 through 19, the lift pin 430 may be inserted into the grip hole 137 formed to the side beam 130. The lift pin 430 may press the side beam 130 inward in the horizontal first direction x in a state of being inserted into the grip hole 137. Specifically, when the operation part 412 moves toward the battery cell stack assembly 100 by an operation of a driving part 440 in a state in which the lift pin 430 is inserted into the grip hole 137, the lift pin 430 may also move toward the battery cell stack assembly 100 accordingly and press the side beam 130 toward the battery cell stack assembly 100. Through this, until the battery cell stack assembly 100 in a state of being pressed by the pressing unit 200 is carried by the gripper 300 and seated on the pack housing 11, the state of being pressed may be maintained.

A plurality of lift pins 430 may be disposed for each side beam 130. In other words, the plurality of lift pins 430 may be provided to each operation part 312. The plurality of lift pins 430 provided to each side beam 130 may be arranged in the horizontal second direction y. As a plurality of lift pins 330 is provided to each side beam 130, the side beam 130 being pressed by a lift pin 330 may be effectively performed.

Numbers of lift pins 430 arranged in the horizontal second direction y for side beams 130 may correspond to each other. Also, the pins 430 arranged in the horizontal second direction y for each side beam 130 may be configured so that the pins 430 are disposed at positions facing each other. Through this, since the second gripper 400 may grip the battery cell stack assembly 100 in equilibrium, stability of carrying the battery cell stack assembly 100 may be improved.

Referring to FIGS. 13, 14, and 18, the lift pin 430 may include a first pin 431 having a first length and a second pin 432 having a second length. For example, the first length may be longer than the second length.

When the second gripper 400 grips the battery cell stack assembly 100, the first pin 431 may be provided to have a length for allowing a lower end of the first pin 431 to protrude below a lower end of the mounting part 133 of the side beam 130. For example, when the second gripper 400 grips the battery cell stack assembly 100, the first pin 431 may be provided to have a length for being positioned below a half of a height of the side beam 130.

The first pin 431 may apply a sufficient pressing force to the side beam 130. Specifically, when the lift pin 430 is inserted into the grip hole 137 of the side beam 130 to press the side beam 130 toward the plurality of planar battery cells 110, the first pin 431 may be positioned below the lower end of the mounting part 133 of the side beam 130, desirably, below the half of the height of the side beam 130. Through this, a lower area of the side beam 130 may be prevented from being spaced outward by an elastic restoration force of the plurality of planar battery cells 110.

For example, when the second gripper 400 grips the battery cell stack assembly 100, the second pin 432 may be provided so that a lower end of the second pin 432 has a length for being conformed to the lower end of the mounting part 133 of the side beam 130 or being positioned above the lower end of the mounting part 133 of the side beam 130.

Referring to FIGS. 13 and 14, the lift pins 430 arranged in the horizontal second direction y for each side beams 130 may be formed in combination of the first pin 431 and the second pin 432. For example, in the lift pins 430 arranged in the horizontal second direction y for each side beams 130, the first pin 431 and the second pin 432 may be alternately disposed in the horizontal second direction y. Specifically, the groove 16 may be formed to the coupling part 12 in order that the first pin 431 protruding below the lower end of the mounting part 133 and the coupling part 12 of the pack housing 11 do not interfere with each other in a process in which the battery cell stack assembly 100 is mounted to the pack housing 11. At this point, when all pins provided in one row of lift pins 430 are first pins 431, since grooves 16 are to be formed to the coupling part 12 so that the number of the grooves 16 corresponds thereto, structural rigidity of the coupling part 12 may be weakened. Thus, it may be desired that the number of the first pins 431 is a number sufficient for the second gripper 300 to provide a pressing force at a predetermined level while remaining lift pins 430 are provided as second pins 432. However, the lift pins 430 are not limited thereto and may be formed with the first pin 431 when the coupling part 12 of the pack housing 11 has sufficient structural rigidity. Also, although the lift pins 430 are formed with the second pin 432, when the second gripper 400 provides a sufficient pressing force for the side beam 130, and when the lower area of the side beam 130 is not spaced outward by the elastic force of the plurality of planar battery cells 110, all the lift pins 430 may be formed with the second pin 432.

Referring to FIGS. 13 and 14, the lift pins 430 which are arranged in the horizontal second direction y for the side beam 130 which is coupled to one side of the plurality of planar battery cells 110 in the horizontal first direction x and the lift pins 430 which are arranged in the horizontal second direction y for the side beam 130 which is coupled to another side of the plurality of planar battery cells 110 in the horizontal first direction x may have different combinations of the first pin 431 and the second pin 432.

For example, referring to FIGS. 13 illustrating the lift pins 430 arranged in the horizontal second direction y for the side beam 130 coupled to the one side of the plurality of planar battery cells 110 in the horizontal first direction x, the lift pins 430 may have an arrangement of first pin 431-second pin 432-first pin 431-second pin 432-first pin 431. Meanwhile, referring to FIGS. 14 illustrating the lift pins 430 arranged in the horizontal second direction y for the side beam 130 coupled to the other side of the plurality of planar battery cells 110 in the horizontal first direction x, the lift pins 430 may have an arrangement of second pin 432-first pin 431-second pin 432-first pin 431-second pin 432.

In other words, it may be understood that one of the lift pins 430 which face each other in the horizontal first direction x is the first pin 431 and another one thereof may be the second pin 432. When all the lift pins 430 facing each other in the horizontal first direction x are formed with the first pin 431, the groove 16 (illustrated in FIG. 22) for preventing interference of the first pin 431 at the coupling part 12 (illustrated in FIG. 22) which is disposed between two battery cell stack assemblies 100 may be formed at positions adjacent in the horizontal first direction x, and as a result, the structural rigidity of the coupling part 12 may be weakened as a portion at which the groove 16 (illustrated in FIG. 22) is formed at the coupling part 12 (illustrated in FIG. 22) become thin. Thus, in order that grooves 16 (illustrated in FIG. 22) provided to correspond to battery cell stack assemblies 100 adjacent to each other are alternately disposed at the coupling part 12, it may be desired that the lift pin 430 is disposed so that when one of the lift pins facing each other in the horizontal first direction x is the first pin 431, another one thereof is the second pin 432.

Referring to FIG. 19, a horizontal cross section of the lift pin 430 may have a quadrangular shape of which a vertex portion is rounded. That is, the horizontal cross section of the lift pin 430 may have the quadrangular shape of which the vertex portion is filleted. A shape of the horizontal cross section of the lift pin 430 may correspond to a shape of the grip hole 137 of the side beam 130. The horizontal cross section of the lift pin 430 may be provided in a size slightly smaller than that of the grip hole 137 of the side beam 130. As the horizontal cross section of the lift pin 430 and the grip hole 137 are provided in quadrangular shapes, when the lift pin 430 is inserted into the grip hole 137 to press the side beam 130 in the horizontal first direction x, since the lift pin 430 and the grip hole 137 may be in areal contact with each other, the second gripper 400 may stably press the side beam 130. In addition, as vertex portions of the horizontal cross section of the lift pin 430 and the shape of the grip hole 137 are formed to be rounded, although the lift pin 430 is not perfectly inserted into a center of the grip hole 137, since the lift pin 430 may be slid along the rounded portion of the grip hole 137 to be aligned to a central area of the grip hole 137 in the horizontal second direction y when the gripper pin 430 moves in the horizontal first direction x, stable pressing by the lift pin 430 may be implemented. Also, as the vertex portions of the horizontal cross section of the lift pin 430 and the shape of the grip hole 137 are formed to be rounded, although the lift pin 430 is slightly obliquely inserted into the grip hole 137, deformation of or damage to the side beam 130 due to concentration of stress by a corner portion of the lift pin 430 may be prevented. However, a shape of the cross section of the lift pin 430 is not limited thereto and may be circular or oval or may be provided in a rectangular shape of which a vertex portion is not rounded.

The lift pin 430 may operate together with operation of the operation part 412. Specifically, the operation part 412 may move away from or closer to the body portion 411, and the lift pin 430 which is connected to the operation part 412 may move together with the operation part 412.

The second gripper 400 may include the driving part 440. The driving part 440 may include the body portion 411. For example, as illustrated in FIGS. 12 through 15, the driving part 440 may include the body portion 411. However, the driving part 440 is not limited thereto and may be disposed in the body portion 411.

The second gripper 400 may include a shaft 450. The shaft 450 may connect the driving part 440 and the operation part 412. The shaft 450 may provide a driving force of the driving part 440 to the operation part 412. The operation part 412 may move by an operation of the driving part 440.

FIG. 20 is a plan view of an inside of a pack housing of a battery pack according to an example aspect of the present disclosure. FIG. 21 is an enlarged perspective view of the battery pack according to an example aspect of the present disclosure. FIG. 22 is an enlarged perspective view of a portion of the pack housing of the battery pack according to an example aspect of the present disclosure and a portion of a side beam.

Referring to FIGS. 20 and 21, the pack housing 11 may include the guide pin 14. The guide pin 14 may protrude above from a floor portion of the pack housing 11. The guide pin 14 may be provided at positions corresponding to four vertex areas of the battery cell stack assembly 100.

A guide hole 138 into which the guide pin 14 may be inserted may be formed to a lower portion of the guide pin 14. The guide hole 138 may be formed to one side and another side in the horizontal second direction y of each of two side beams 130 of the battery cell stack assembly 100.

When the battery cell stack assembly 100 is disposed to the pack housing 11, the guide pin 14 of the pack housing 11 may be inserted into the guide hole 138 of the side beam 130 to guide the battery cell stack assembly 100 so that the battery cell stack assembly 100 is seated on and fixed to an appropriate position in the pack housing 11, and an interval between both side beams 130 of the battery cell stack assembly 100 in the horizontal first direction x although the gripper 300 is separated from the battery cell stack assembly 100.

Referring to FIG. 22, in a state in which the guide pin 14 of the pack housing 11 is inserted into the guide hole 138 of the side beam 130 and a length of the battery cell stack assembly 100 in the horizontal fist direction x is maintained, the coupling member 140 may be coupled to the coupling part 12 of the pack housing 11 by penetrating the mount hole 134, so that the battery cell stack assembly 100 may be mounted to the pack housing 11 in a state in which initial pressing by the pressing unit 200 (illustrated in FIG. 6) is maintained.

Referring to FIGS. 20 and 22, the pack housing 11 may include the coupling part 12. The coupling part 12 may be understood as a cross beam of the pack housing 11. The coupling part 12 may protrude above from the floor portion 13 and may be extended in the horizontal second direction y. That is, the coupling part 12 may be extended in a direction corresponding to an extension direction of the side beam 130. Two battery cell stack assemblies 100 adjacent to each other in the horizontal first direction x may be coupled to the coupling part 12.

The pack housing 11 may include the coupling hole 15. The coupling hole 15 may be formed by penetration on an upper surface of the coupling part 12. When the battery cell stack assembly 100 is mounted to the pack housing 11, the coupling hole 15 may be formed at a position overlapping the mounting hole 134 of the side beam 130 in a vertical direction. The coupling member 140 which penetrates the mounting hole 134 of the side beam 130 may be fastened to the coupling hole 15.

The pack housing 11 may include the groove 16. The groove 16 may be formed in a form in which the upper surface and a side surface of the coupling part 12 are opened. However, the groove 16 is not limited thereto and may be formed in a form penetrating the upper surface of the coupling part 12. A vertex (or corner) portion of the groove 16 may be formed to be rounded. That is, the vertex (or corner) portion of the grip hole 16 may be opened in a filleted form.

As the groove 16 is formed, the first pin 431 among the lift pins 430 of the second gripper 400 may not interfere with the coupling part 12. Specifically, the first pin 431 of the second gripper 400 may protrude below the mounting part 133 of the side beam 130, and when the second gripper 400 carries and mount the battery cell stack assembly 100 to the pack housing 11 in this state, a portion of the first pin 431, which protrudes below the mounting part 133, may be inserted into the groove 16. Through this, the first pin 431 and the coupling part 12 may not interfere with each other.

The groove 16 which is formed to correspond to each of two battery cell stack assemblies 100 (illustrated in FIG. 1) disposed at one side and another side of the coupling part 12 in the horizontal first direction x may be formed at positions not overlapping each other in the horizontal first direction x. Specifically, the groove 16 which is formed on one side of the coupling part 12 in the horizontal first direction x and the groove 16 which is formed on another side of the coupling part 12 in the horizontal first direction x may be formed at positions not overlapping each other in the horizontal first direction x. With respect to FIGS. 13 and 14, this may correspond to that the first pin 431 and the second pin 432 among the lift pins 430 arranged in the horizontal second direction x are alternately arranged, that one of the lift pins 430 which face each other in the horizontal first direction x is the first pin 431, and that another one thereof is formed as the second pin 432. Through this, since a thickness of the coupling part 12 in the horizontal first direction x may be maintained at a predetermined level or more, structural rigidity of the coupling part 12 may be prevented from weakening due to the groove 16.

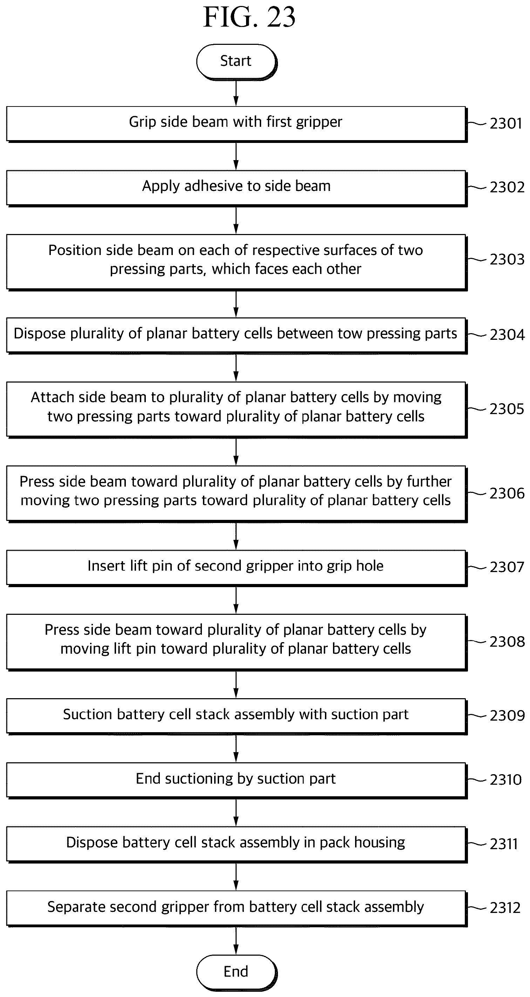

FIG. 23 is a flowchart of a method of manufacturing a battery pack according to various example aspects of the present disclosure.

Hereinafter, a method of manufacturing the battery pack 10 illustrated in FIG. 23 will be described with reference to FIGS. 1 through 22.

The method of manufacturing the battery pack 10 may include a method of manufacturing the battery cell stack assembly 100 (including operation 2301 to operation 2306).

For example, in operation 2301 and operation 2302, the method of manufacturing the battery cell stack assembly stack assembly 100 may include applying the adhesive A on a surface of the side beam 130, which faces the plurality of planar battery cells 110, in a state in which the side beam 130 is gripped by the first gripper 300 connected to the articulated robot R1. In this case, the side beam 130 may be rotated through various angles by the articulated robot R1. In order to easily apply the adhesive A to the side beam 130, the side beam 130 may be rotated so that the surface of the side beam 130, which faces the plurality of battery cells 110, faces upward.

In operation 2303, the method of manufacturing the battery cell stack assembly 100 may include disposing the side beam 130 on each of respective surfaces of two pressing parts 210, which face each other. At this point, a temporary fixation hole (not illustrated) formed on a lower surface of the mounting part 133 of the side beam 130, the mounting hole 134, or the grip hole 137 may be seated on the protrusion pin 240. Through this, a position of the side beam 130 may be guided. The side beam 130 may be suctioned by air onto each of the respective surfaces of the two pressing parts 210 and accordingly fixed on an inner side surface of the pressing part 210. Air suction of the side beam 130 may be performed by the air suction part 230 provided to the pressing part 210.

In operation 2304, the method of manufacturing the battery cell stack assembly 100 may include disposing the plurality of planar battery cells 110 between the two pressing parts 210 on the palette 220. In this operation, the battery cell stack assembly 100 may be understood as being disposed between two side beams 130 suctioned to the two pressing parts 210.

Meanwhile, in contrast, the disposing of the plurality of planar battery cells 110 may be performed before the side beam 130 is supplied to the pressing unit 200, or the above-mentioned two operations may be simultaneously performed.

In operation 2305, the method of manufacturing the battery cell stack assembly 100 may include attaching the side beam 130 to the plurality of planar battery cells 110 by moving the two pressing parts 210 toward the plurality of planar battery cells 110. Specifically, the side beam 130 may move toward the plurality of planar battery cells 110 as the pressing part 210 moves and may be attached to the plurality of planar battery cells 110 by the adhesive A applied on the surface of the side beam 130, which faces the plurality of planar battery cells 110.

In operation 2306, the method of manufacturing the battery cell stack assembly 100 may include pressing the side beam 130 toward the plurality of planar battery cells 110 by moving the two pressing parts 210 toward the plurality of planar battery cells 110. Pressing the side beam 130 may be performed until a length of the battery cell stack assembly 100 in the horizontal first direction x reaches a desired level. For example, pressing the side beam 130 may be performed to a degree to which the length of the battery cell stack assembly 100 in the horizontal first direction x is at a level at which the two side beams 130 of the battery cell stack assembly 100 may be coupled to the coupling part 12 (illustrated in FIG. 1) of the pack housing 11 (illustrated in FIG. 1) when the battery cell stack assembly 100 is mounted to the pack housing 11 (illustrated in FIG. 1).

Then, the method of manufacturing the battery pack 10 may include, after manufacture of the battery cell stack assembly 100 according to operation 2301 to operation 2306, attaching the second gripper 400 onto the battery cell stack assembly 100 and inserting the lift pin 430 into the grip hole 137 which is formed to the side beam 130 in operation 2307. At this point, the battery cell stack assembly 100 may be in a state of being pressed in the horizontal first direction x by the pressing unit 200.

In operation 2308, the method of manufacturing the battery pack 10 may include pressing the side beam 130 toward the plurality of planar battery cells 110 with the lift pin 430 by moving the lift pin 430 toward the plurality of planar battery cells 110. Through this, even in a state in which the two pressing parts 210 of the pressing unit 200 are spaced apart outward so that pressing by the pressing unit 200 is ended, a pressed state of the battery cell stack assembly 100 may be maintained.

In operation 2309, the method of manufacturing the battery pack 10 may include suctioning an upper surface of the battery cell stack assembly 100 with the suction part 420 provided to the second gripper 400. The suction part 420 may suction the battery cell stack assembly 100, and through this, the battery cell stack assembly 100 may be lifted by the second gripper 400.

When the suctioning by the suction part 420 is performed before the pressing by the pressing unit 200, since the suction part 420 which has a sponge material may be caught between the planar battery cells 110, it may be desired that the suctioning by the suction part 420 is performed after the battery cell stack assembly 100 is sufficiently pressed by the pressing unit 200.

Meanwhile, in various example aspects, the suctioning of the upper surface of the battery cell stack assembly 100 with the suction part 420 may be performed before the pressing of the side beam 130 toward the plurality of planar battery cells 110 with the lift pin 430, may be performed simultaneously with the pressing of the side beam 130 toward the plurality of planar battery cells 110 with the lift pin 430, or may be performed after the pressing of the side beam 130 toward the plurality of planar battery cells 110 with the lift pin 430.

In operation 2310, the method of manufacturing the battery pack 10 may include ending pressing by the pressing part 210. In this operation, in order to prevent the protrusion pin 240, which protrudes above the pressing part 210 to be inserted into the temporary fixation hole (not illustrated) formed on the lower surface of the mounting part 133 of the side beam 130, the mounting hole 134, or the grip hole 137, from interfering with the side beam 130, the protrusion pin 240 may descend to enter into the pressing part 210.

In operation 2311, the method of manufacturing the battery pack 10 may include moving and disposing the battery cell stack assembly 100 which is gripped by the second gripper 400 into the pack housing 11. In this operation, the battery cell stack assembly 100 may be disposed so that the guide pin 14 of the pack housing 11 is inserted into the guide hole 138 of the side beam 130.

In operation 2312, the method of manufacturing the battery pack 10 may include separating the second gripper 400 from the battery cell stack assembly 100.

The method of manufacturing the battery pack 10 may further include allowing the coupling member 140 (illustrated in FIG. 1) to penetrate the mounting hole 134 and to be coupled to the coupling part of the pack housing 11.

The example aspects or other example aspects of the present disclosure described above are not mutually exclusive or distinguished from each other. Each element or function in the example aspects or other example aspects of the present disclosure described above may be used in combination with or combined to another.

For example, the element A described in an example aspect and/or a drawing and/or the element B described in another example aspect and/or another drawing may be combined. In other words, although combination between elements has not been directly described, the combination may be possible unless the combination is described as being impossible.

The above-described details are not to be limitedly construed in all aspects and are to be considered as an example. The scope of the present disclosure is to be determined by a reasonable interpretation of the accompanying claims, and all modifications within a range equivalent to the present disclosure belong to the scope of the present disclosure.

## Claims

1. A gripper configured to carry, to a pack housing, a battery cell stack assembly comprising a plurality of planar battery cells stacked in a horizontal first direction and a side beam coupled to one side and another side of the plurality of planar battery cells in the horizontal first direction, the gripper comprising:
a base disposed above the battery cell stack assembly;
a suction part disposed below the base in a central area of the base and configured to suction the battery cell stack assembly; and
lift pins protruding below the base and configured to be coupled to grip holes formed to the side beam in a vertical direction.

2. The gripper of claim 1, wherein when inserted into the grip holes, the lift pins are configured to engage the side beams with the plurality of planar battery cells.

3. The gripper of claim 1, wherein the base includes:
a body portion; and
an operation part disposed to one side and another side of the body portion in the horizontal first direction,
wherein the operation part is configured to move away from or closer to the body portion, and
wherein the lift pins protrude below the operation part and are configured to move with the operation part.

4. The gripper of claim 3, further comprising:
a driving part fixed to the body portion; and
a shaft configured to connect to the driving part and the operation part,
wherein the operation part is configured to move by an operation of the driving part.

5. The gripper of claim 1, wherein the grip holes have a quadrangular shape
of which a hole corner of the grip holes is rounded, and
wherein the lift pins have a quadrangular shape of which a pin corner of the lift pins is rounded to correspond to the shape of the grip holes.

6. The gripper of claim 1, wherein the lift pins are arranged in a horizontal second direction crossing the horizontal first direction for each of the side beams coupled to the one side and the other side of the plurality of planar battery cells in the horizontal first direction.

7. The gripper of claim 6, wherein the lift pins which are arranged in the horizontal second direction for a side beam coupled to the one side of the plurality of planar battery cells in the horizontal first direction and the lift pins which are arranged in the horizontal second direction for a side beam coupled to the other side of the plurality of planar battery cells in the horizontal first direction are provided so that numbers of lift pins correspond to each other.

8. The gripper of claim 6, wherein the lift pins that are arranged in the horizontal second direction include:
a first pin; and
a second pin having a length relatively shorter than that of the first pin.

9. The gripper of claim 8, wherein the first pin and the second pin are disposed alternately in the horizontal second direction.

10. The gripper of claim 8, wherein the lift pins which are arranged in the horizontal second direction for a side beam coupled to the one side of the plurality of planar battery cells in the horizontal first direction and the lift pins which are arranged in the horizontal second direction for a side beam coupled to the other side of the plurality of planar battery cells in the horizontal first direction are configured so that the lift pins are individually disposed at positions facing one another in the horizontal first direction,
one of the lift pins which faces one another in the horizontal first direction is the first pin, and
the other one is the second pin.

11. The gripper of claim 1, wherein the suction part includes a pad having an elastic material.

12. The gripper of claim 1, wherein the suction part is provided to have a wide-area foam-type material.

13. The gripper of claim 1, wherein the suction part includes multiple suction holes.

14. A method of manufacturing a battery pack by joining, to a pack housing through a gripper comprising a base and a lift pin protruding below the base, a battery cell stack assembly comprising a plurality of planar battery cells stacked in a horizontal first direction and a side beam coupled to one side and another side of the plurality of planar battery cells in the horizontal first direction, wherein the side beam comprises:
a planar plate part; and
a mounting part protruding opposite to the plurality of planar battery cells from the plate part, and
the method of manufacturing the battery pack comprises:
inserting the lift pin into a grip hole formed, in a vertical direction, to the mounting part which is coupled to the one side and the other side of the plurality of planar battery cells in the horizontal first direction;
pressing the side beam toward the plurality of planar battery cells with the lift pin by moving the lift pin toward the plurality of planar battery cells and suctioning an upper surface of the battery cell stack assembly with a suction part provided to the gripper;
disposing the battery cell stack assembly into the pack housing by moving the battery cell stack assembly which is gripped by the gripper; and separating the gripper from the battery cell stack assembly.

15. The method of claim 14, wherein the pack housing comprises:
a floor portion; and
a coupling part protruding above the floor portion and disposed below the mounting part when the battery cell stack assembly is disposed in the pack housing,
wherein the lift pin includes a first pin having a length at which a lower end protrudes further below the mounting part when the gripper attaches to the battery cell stack assembly, and
wherein the coupling part includes a groove for receiving the first pin which protrudes further below the mounting part when the battery cell stack assembly is gripped by the gripper and disposed to the pack housing is formed to the coupling part.

16. The method of claim 15, wherein the coupling part is disposed between two battery cells stack assemblies arranged to be adjacent in the horizontal first direction in the pack housing, and
a groove formed to correspond to each of the two battery cell stack assemblies is formed at a position not overlapping another in the horizontal first direction.

17. The method of claim 14, wherein the pack housing comprises a guide pin protruding above from the floor portion of the pack housing,
wherein the side beam includes a guide hole into which the guide pin is to be inserted is formed to a lower portion of the side beam, and
when the battery cell stack assembly is manipulating to be disposed in the pack housing, the guide pin is inserted into the guide hole.

18. The method of claim 14, wherein the pressing of the side beam toward the plurality of planar battery cells with the lift pin is performed earlier than the suctioning of the upper surface of the battery cell stack assembly with the suction part of the gripper.

19. The method of claim 14, further comprising coupling a coupling member to a coupling part of the pack housing by allowing the coupling member to penetrate a mounting hole vertically formed to the mounting part after the gripper is separated from the battery cell stack assembly.
